# EUROPEAN PATENT SPECIFICATION

(11) **EP 2 245 920 B1**
(45) Date of publication and mention of the grant of the patent: **10.04.2019**
(21) Application number: 10004432.0
(22) Date of filing: 27.04.2010
(51) Int. Cl.: A47G 7/08, A01G 13/02

(54) **Method and tubular body for raising plants**
Verfahren und Röhrenkörper zum Züchten von Pflanzen
Procédé et corps tubulaire pour cultiver des plantes

(30) Priority: 27.04.2009 NL 1036902
(43) Date of publication of application: 03.11.2010
(73) Proprietor: A.J.M. de Koning Beheer B.V., 2631 NA Nootdorp (NL)
(72) Inventor: De Koning, Adrianus Johannes Maria, 2631 NA Nootdorp (NL)
(74) Representative: Algemeen Octrooi- en Merkenbureau B.V.

(56) References cited:
- WO-A1-98/15213
- FR-A- 736 966
- GB-A- 1 243 670
- GB-A- 2 350 274
- NL-C2- 1 031 049
- US-B1- 6 219 962

## Description

The invention, according to a first aspect thereof, relates to a method for raising plants rooted in a ball of cultivating material in a container, wherein the plant is enclosed in an at least substantially shape-retaining tubular body. It is possible to place the tubular body around (part of) the ball of cultivating material when the "plant" is just a seed, after which the plant grows in the space enclosed by the tubular body. The tubular body may be a separate body, which is or will be attached to the container or which is or will be placed round the container. The tubular body may also form an integral part of the container, however, in which case the container extends to above the ball of cultivating material.

Plants are generally raised together in large numbers, each plant being rooted in a ball of cultivating material, which is usually contained in a pot. The plants are generally spaced fairly close together. A problem that occurs in such a situation is that branches and leaves of plants adjacent to each other may become intertwined, which makes it difficult to separate the plants and which may lead to branches and leaves being damaged and/or breaking off, which has an adverse effect on the plant quality. To eliminate this problem, it is known to enclose the plant in a tubular body. Thus the branches of the plant can only tilt outwards to a limited extent. With a number of plants, such as the phalaenopsis, a leafless branch, also called stalk, grows separately from the leaf under the leaf. When the leaf grows over the edge of the tubular body, it will rest on the upper edge of the tubular body. Subsequently there will be hardly if any room for a stalk developing under said leaf to grow between the upper edge of the tubular body and the leaf. This leads to an increased risk of deformation of the stalk.

The object of the invention is to provide a method for raising plants by means of which this drawback of the conventional method can be overcome. This object is achieved by claim 1.

According to the invention, this object can be accomplished in that the tubular body comprises an upper edge that faces away from the ball of cultivating material in the position of use, in which recessed portions are provided, with branches of the plant growing through the space provided by recessed portions in the upper edge to beyond the upper edge of the tubular body, wherein to train the branches of a plant towards the recessed portions, the inner surface of the tubular body facing the plant is provided with guide surfaces which extend at least substantially in vertical direction in the position of use of the tubular body and which, seen in cross-sectional view of the tubular body, include an angle with a line enveloping the outer side of the tubular body. The recessed portions in the upper edge thus provide a space for a branch, or stalk, between the recessed portion of the upper edge and a leaf resting on (a higher portion of) the upper edge. The centre-to-centre distance between adjacent recessed portions is preferably 0.5 - 5 cm, furthermore preferably at least 0.75 cm and/or at most 2.5 cm. Also the distance in vertical direction between the upper edge at the location of a raised portion and the upper edge at the location of a recessed portion is preferably 0.2 - 10 cm, furthermore at least 0.3 and/or at most 5 cm.

The invention preferably relates to a method for raising a phalaenopsis, or at least a phalaenopsis-like plant. With such a plant, separate leaves and leafless stalks grow from a stem rooted in the ball of cultivating material. When a leaf is fully grown and rests on the upper edge of the tubular body, a leafless stalk developing between the leaf and the tubular body can grow through a recessed portion in the upper edge to beyond the upper edge of the body without, or at least to a significantly lesser extent being impeded, by the leaf. As a result, the stalk will grow straight, or at least straighter than will be the case when a tubular body having a flat upper edge is used, resulting in a higher plant value.

In a preferred embodiment, the tubular body is clamped over the upper edge of a pot functioning as a container for the ball of cultivating material. The tubular body extends upwards like a collar from the upper edge of the pot. Although this is not necessary, this has the advantage that the tubular body is supported by the pot, so that it will retain the desired vertical orientation more easily, even when leaves of the plant rest on the upper edge of the tubular body.

In an alternative embodiment, the tubular body is placed on a supporting surface and around a pot containing the ball of cultivating material. The pot and at least part of the plant are enclosed by the tubular body in this embodiment.

In a preferred embodiment of the present invention, the upper edge of the tubular body has a corrugated pattern of recessed and raised portions, and branches of the plant grow through valleys of the corrugated pattern that form said recessed portions. A corrugated pattern is a pattern that is easy to form, avoiding acute angles. The presence of such acute angles might lead to damage to a branch or cause the tubular body to tear.

Alternatively, the upper edge of the tubular body comprises a serrated pattern of adjacent recessed and raised portions, and branches of the plant grow through spaces provided by the recessed portions of the separated pattern. A serration provides more space for a branch to grow under a leaf resting on the upper edge of the tubular body than a uniformly corrugated pattern.

In another alternative embodiment of the invention, the upper edge of the tubular body comprises a crenellated pattern of adjacent recessed and raised portions, and branches of the plant grow through spaces provided by the lower portions of the crenellated pattern. In this embodiment, a recessed portion provides even more space under a leaf resting on the upper edge of the tubular body.

To train the branches of a plant towards the recessed portions, the inner surface of the tubular body facing the plant is provided with guide surfaces which extend at least substantially in vertical direction in the position of use of the tubular body and which, seen in cross-sectional view of the tubular body, include an angle with a line enveloping the outer side of the tubular body. The term "enveloping line" is still be understood to mean a line which extends along the outer parts of the tubular body.

Preferably, aeration means are provided for allowing an air flow from a location near the underside of the tubular body upwards through the interior of the tubular body. This stimulates the growth of a plant rooted in the cultivating material.

In a preferred embodiment, the aeration means comprise at least one hole in the circumferential wall of the tubular body, and the tubular body is placed around the pot and the plant in such a manner that said at least one hole is located above the edge of the pot. Air can thus flow into the tubular body through said at least one hole and upwards along the plant. This stimulates the growth of the plant. This aspect, incidentally, can also be used independently of the principal idea of the present invention.

The present invention, according to a second aspect thereof, relates to an at least substantially shape-retaining body and a plant being rooted in a ball of cultivating material intended for use in raising plants according to the first aspect of the present invention. The tubular body solves problems corresponding to the first aspect of the present invention in a corresponding manner, and to that end comprises the features of claim 10. The upper edge of the tubular body is the edge that, in the position of use, faces away from a ball of cultivating material present in the tubular body.

In preferred embodiments of the present invention, the upper edge of the tubular body comprises a corrugated, serrated or crenellated pattern of adjacent recessed and raised portions.

It is preferable in that case if the central part of a guide surface extends to, or in the direction of, a recessed portion in the upper edge. The guide surfaces are thus suitable for training a growing branch in the direction of a recessed portion in the upper edge.

In order to make it possible to shorten the tubular body, it is preferable if the tubular body is provided with a weakening line extending transversely to the longitudinal axis thereof, such that the tubular body can be separated into two parts.

In a preferred embodiment, the tubular body has an at least substantially circular cross-section.

Alternatively, the tubular body may exhibit an at least substantially polygonal cross-section, preferably a hexagonal or octagonal cross-section.

The tubular body can be formed in a simple manner if the tubular body is folded from a sheet-like material.

The tubular body is preferably provided with at least one hole in its circumferential wall, such that said at least one hole is located above the upper edge of a pot containing a plant. In this way a better aeration of the plant in question can be realised.

Tubular bodies for raising plants in which a window is present in the circumferential wall are known, to be sure, but in the case of the known tubular body the window is located at the level of the pot. Said window functions to make it possible to read a bar code present on the pot and hardly leads to a better aeration, if at all.

British patent GB 1243670 discloses a flower pot holder comprising a tapering sleeve like shell of water impermeable material, open at both ends, having a shoulder portion adjacent its lower narrower end which is shaped to stand on a generally level surface and air inlet means in the wall of the shell below the said shoulder portion thereby when a first conical porous flower pot of suitable dimensions is inserted so as to seed against the shoulder, the shoulder will make sealing engagement with the pot and the sleeve will form with the pot an annular reservoir. The sleeves hide the unaesthetic beaked clay pots thus serving as a flower pot-case and also protecting the brittle beaked clay pot.

United States patent US 6,219,962 B1 discloses a plant guard made of a sheet of material which is formed into a tubular shape. Side marginal edges of the sheet are secured together by a fastener. The flap is formed at one end adjacent one side marginal edge, the flap being folded, in use, over a supporting wire so that the wire passes in front of and adjacent the engaged marginal edges to prevent disengagement thereof.

The present invention will be explained in more detail hereinafter. Examples are shown in the appended drawings, in which:
Figure 1 is a perspective side view of a sleeve functioning as a tubular body, which encloses a plant contained in a pot;
Figure 2 is a perspective side view of an alternative sleeve according;
Figure 3 is a perspective side view of another alternative of a sleeve;
Figure 3a is a view of the underside of the sleeve of figure 3;
Figure 4 is a perspective view of a sleeve according to the present invention, which has a ribbed inner surface;
Figure 4a is a more detailed view of the upper side of the sleeve of figure 4;
Figure 5 is a perspective view of a pot provided with a collar.

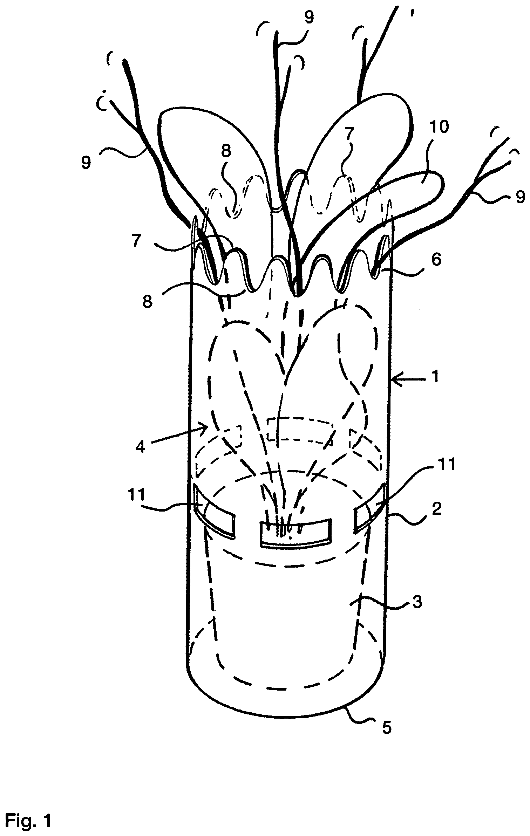

The sleeve 1 shown in figure 1, which is preferably made of a transparent plastic material, comprises a cylindrical wall 2 and has an inner circumference which substantially corresponds to the outer circumference of a pot 3 in which a plant 4 is raised and around which the sleeve 1 is provided. The sleeve 1 is supported with a flat lower edge 5 on a supporting surface (not shown) on which the pot 3 is placed. At its upper end, the sleeve 1 has a circumferential edge 6 exhibiting a corrugated pattern, so that a pattern of adjacent raised portions 7 and recessed portions 8 is formed. Stalks 9 extend through a number of recessed portions 8 of the circumferential edge 6, which stalks are held in place in said recessed portions. Leaves 10 rest on raised portions 7 of the upper circumferential edge 6. Aeration holes 11 are provided in the sleeve 1 just above the upper edge of the pot 3, through which holes air can flow from outside the sleeve 1 into the sleeve 1 and subsequently upwards along the plant 4.

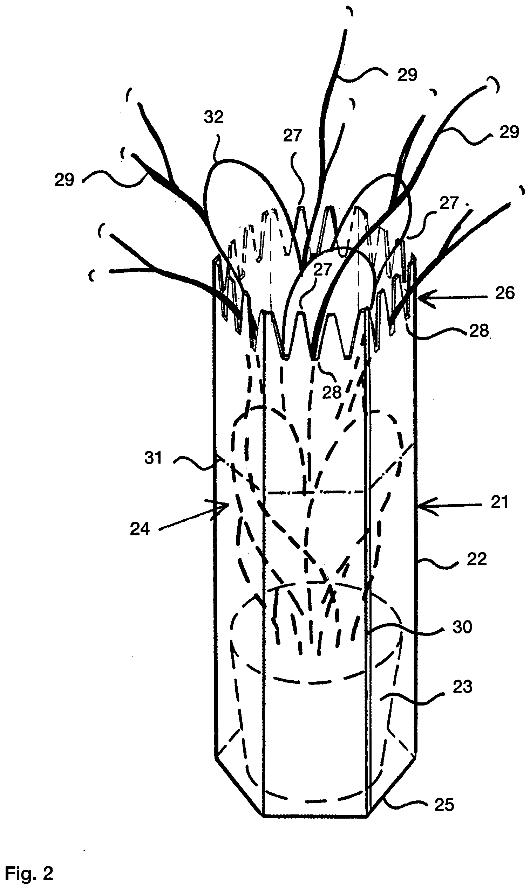

Figure 2 shows an alternative of a sleeve 21, which comprises a wall 22 having a hexagonal cross-section. Also in this case, the inner circumference of the sleeve 21 substantially corresponds to the outer circumference of a pot 23 in which a plant 24 is being raised. The sleeve 21 has a flat lower edge 25 and a serrated upper circumferential edge 26. The serrations form alternating raised portions 27 and recessed portions 28. Stalks 29 grow through a number of recessed portions 28 under respective leaves 32 resting on the separated circumferential edge 26. Numeral 30 indicates a seam where overlapping portions of the sheet of a transparent plastic forming the sleeve 21 are joined together. Chain-dotted line 31 indicates a weakening line, along which the sleeve 1 can be torn into two parts.

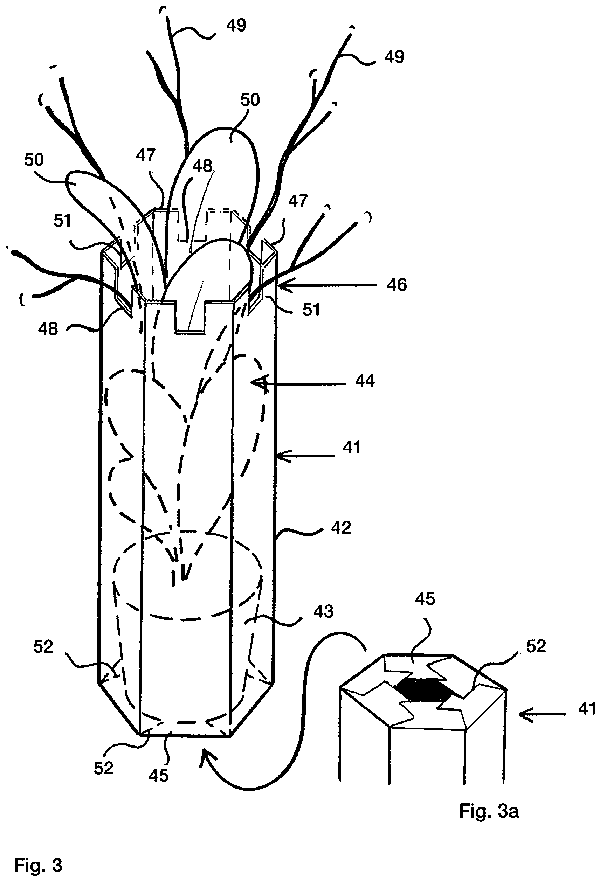

Figure 3 shows yet another sleeve 41, which comprises a wall 42 having a hexagonal cross-section. The wall 42 is folded inwards at the bottom end, forming a flat bottom 45 (see figure 3a), on which a pot 43 containing plants to be raised is placed. The circumferential edge 46 at the upper end of the sleeve 41 is crenellated, so that recessed portions 48 extending substantially horizontally over a short distance are bounded by the upright edge 51, which also bounds raised portions 47. Through said recessed portions 48, stalks 49 of the plant 44 to be raised extend under leaves 50 resting on the raised portions 47. In figure 3a the flat bottom 45 of the sleeve 41 is shown in more detail. From the circumferential lines 52 it can be derived how the bottom of the sleeve 41 was folded from a sheet-like material.

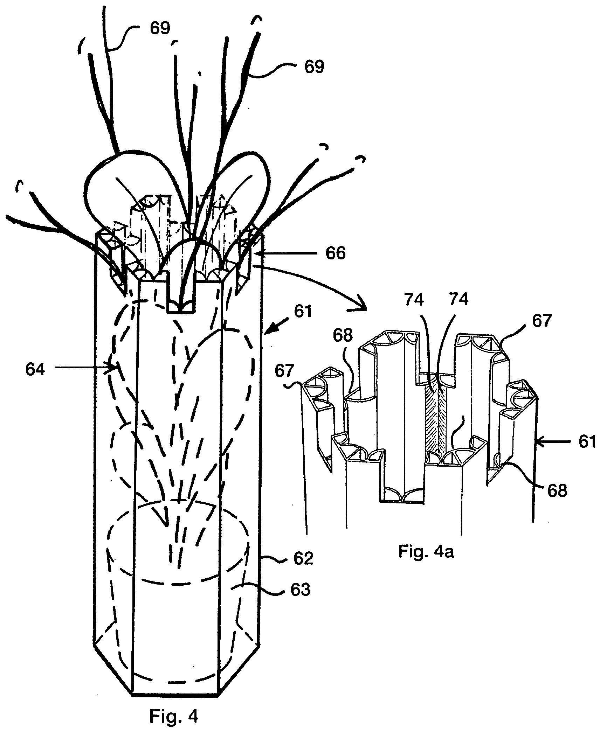

Figure 4 shows a sleeve 61 having a hexagonal wall 62 which is provided with corrugated ribs 70 on the inner side (see also figure 4a). The corrugated ribs 70 of the inner wall 72 form guide surfaces 74, which extend vertically in the vertical position of use of the sleeve 61 that is shown in figures 4, 4a. Seen in cross-sectional view of the sleeve 61, said guide surfaces 74 include an angle with a line enveloping the outer side of the sleeve, which line is formed by the outer circumference of the sleeve 61. For use, the sleeve 61 is placed around a pot 63 containing a plant 64. Although the ribs 70 extend up to the upper edge 66 in figures 4, 4a, the ribs 70 may also terminate some distance below said upper edge. Since two adjacent ribs 70 meet in the centre of the recessed portions 68 (and also, but this is less relevant in this context, in the centre of the raised portions 67), a growing stalk 69 is trained to a recessed portion 68 by the guide surfaces 74 of two adjacent ribs 70.

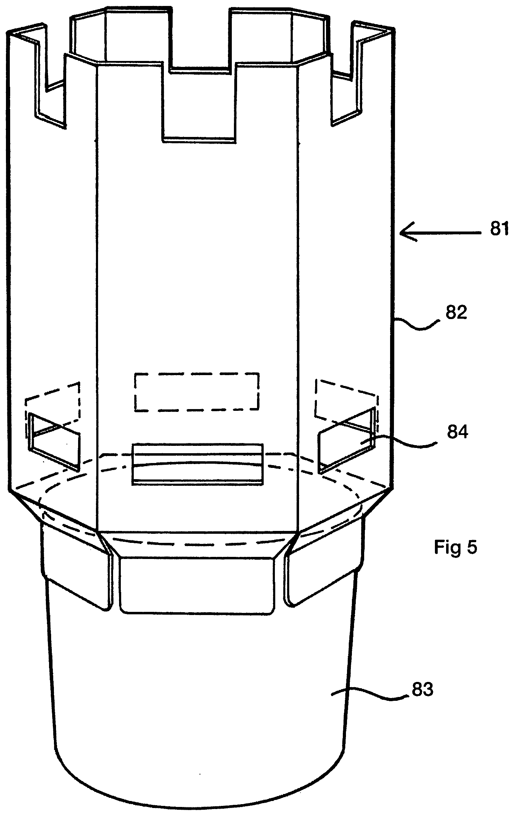

Figure 5 shows a pot 83 in which a plant (not shown) is raised. A collar 81 is clamped around the upper edge of the pot 83. The collar 81 has a crenellated upper edge 86 comparable to that of the sleeve 61. Aeration holes 84 are provided in the wall 82.

It will be understood that many variants are conceivable within the scope of the present invention, which is defined by the appended claims. Thus, a sleeve may be made of a material in the form of an extruded due rather than a sheet-like material. Furthermore, a cross-sectional shape of the sleeve other than a hexagonal cross-sectional shape may be used. A sleeve need not extend to the bottom of the pot. Furthermore, the lower edge of the sleeve need not be straight, it may also have a profile comparable to that of the upper edge, for example. The height of the sleeve and the collar may be adapted to the plant that is raised in the pot, it may vary from 8 cm to 30 cm. The aeration holes shown herein are configured as relatively wide windows extending over a relatively small height. Also differently shaped windows may be quite suitable for enhancing an air flow along the plant. The windows might also be located at a different position in the lower part of a sleeve or a collar, for example in the connecting piece between the clamping edge and the wider tube of a sleeve.

## Claims

1. A method for raising plants rooted in a ball of cultivating material in a container, wherein the plant is enclosed in an at least substantially shape-retaining tubular body (61), **characterised in that** the tubular body comprises an upper edge (66) facing away from the ball of cultivating material in the position of use, in which recessed portions (68) are provided, with branches (69) of the plant growing through the space provided by recessed portions in the upper edge to beyond the upper edge of the tubular body, wherein to train the branches of a plant towards the recessed portions, the inner surface of the tubular body facing the plant is provided with guide surfaces (74) which extend at least substantially in vertical direction in the position of use of the tubular body and which, seen in cross-sectional view of the tubular body, include an angle with a line enveloping the outer side of the tubular body.

2. A method according to claim 1, **characterized in that** said plant is a phalaenopsis, or at least a phalaenopsis-like plant.

3. A method according to claim 1 or 2, **characterized in that** the tubular body is clamped over the upper edge of a pot functioning as a container for the ball of cultivating material.

4. A method according to claim 1 or 2, **characterized in that** the tubular body is placed on a supporting surface and around a pot containing the ball of cultivating material.

5. A method according to one or more of the preceding claims, **characterized in that** the upper edge of the tubular body has a corrugated pattern of recessed and raised portions, and branches of the plant grow through valleys of the corrugated pattern that form said recessed portions.

6. A method according to one or more of claims 1-4, **characterized in that** the upper edge of the tubular body comprises a serrated pattern of adjacent recessed and raised portions, and branches of the plant grow through spaces provided by the recessed portions of the serrated pattern.

7. A method according to one or more of claims 1-4, **characterized in that** the upper edge of the tubular body comprises a crenellated pattern of adjacent recessed and raised portions, and branches of the plant grow through spaces provided by the lower portions of the crenellated pattern.

8. A method according to any one of the preceding claims, **characterized in that** aeration means are provided for allowing an air flow from a location near the underside of the tubular body upwards through the interior of the tubular body.

9. A method according to claim 8, **characterized in that** said aeration means comprise at least one hole in the circumferential wall of the tubular body, and the tubular body is placed around the pot and the plant in such a manner that said at least one hole is located above the edge of the pot.

10. A tubular body (61) and a plant being rooted in a ball of cultivating material, in particular intended for use in a method according to any one of the preceding claims, wherein said tubular body is at least substantially shape-retaining and comprises an upper edge (66) that faces away from the ball of cultivating material, at least in the position of use, which upper edge is provided with recessed portions (68), **characterised in that** to train branches (69) of the plant towards the recessed portions the inner surface of the tubular body is provided with guide surfaces (74) which extend at least substantially in vertical direction and which, seen in cross-sectional view of the tubular body, include an angle with a line enveloping the outer side of the tubular body.

11. A tubular body according to claim 10, **characterized in that** the central part of a guide surface extends to or in the direction of a recessed portion in the upper edge.

12. A tubular body according to claim 10 or 11, **characterized in that** the tubular body is provided with a weakening line extending transversely to the longitudinal axis thereof, such that the tubular body can be separated into two parts.

13. A tubular body according to one or more of claims 10-12, **characterized in that** at least one hole is provided in the circumferential wall, such that in use said at least one hole is located above the upper edge of a pot containing a plant.

14. A tubular body according to claim 10, **characterised in that** the tubular body is made of transparent plastic material.

## Patentansprüche

1. Verfahren zum Aufziehen von Pflanzen, die in einem Klumpen von Kultivierungsmaterial in einem Container verwurzelt sind, wobei die Pflanze in einem wenigstens im Wesentlichen formhaltigen tubulären Körper (61) eingeschlossen ist, **dadurch gekennzeichnet, dass** der tubuläre Körper einen oberen Rand (66) aufweist, der von dem Kultivierungsmaterialklumpen in der Gebrauchsposition weg weist, der ausgesparte Abschnitte (68) aufweist, wobei Zweige (69) der Pflanze durch den durch ausgesparte Abschnitte im oberen Rand entstandenen Raum über den oberen Rand des tubulären Körpers hinaus wachsen, wobei zum Schulen der Zweige einer Pflanze in Richtung der ausgesparten Teile die Innenfläche des tubulären Körpers, die der Pflanze zugewandt ist, mit Führungsflächen (74) versehen ist, die wenigstens im Wesentlichen in vertikaler Richtung in der Gebrauchsposition des tubulären Körpers verlaufen und, in Querschnittsansicht des tubulären Körpers gesehen, einen Winkel mit einer Linie einschließen, die die Außenseite des tubulären Körpers umhüllt.

2. Verfahren nach Anspruch 1, **dadurch gekennzeichnet, dass** die genannte Pflanze eine Phalaenopsis oder zumindest eine Phalaenopsis-ähnliche Pflanze ist.

3. Verfahren nach Anspruch 1 oder 2, **dadurch gekennzeichnet, dass** der tubuläre Körper über den oberen Rand eines Topfs geklemmt wird, der als Container für der Kultivierungsmaterialklumpen dient.

4. Verfahren nach Anspruch 1 oder 2, **dadurch gekennzeichnet, dass** der tubuläre Körper auf einer Trägerfläche und um einen Topf herum gestellt wird, der der Kultivierungsmaterialklumpen enthält.

5. Verfahren nach einem oder mehreren der vorherigen Ansprüche, **dadurch gekennzeichnet, dass** der obere Rand des tubulären Körpers ein gewelltes Muster von ausgesparten und erhabenen Teilen hat und Zweige der Pflanze durch Täler des gewellten Musters wachsen, die die genannten ausgesparten Abschnitte bilden.

6. Verfahren nach einem der Ansprüche 1-4, **dadurch gekennzeichnet, dass** der obere Rand des tubulären Körpers ein Zackenmuster von benachbarten ausgesparten und erhabenen Abschnitten umfasst und Zweige der Pflanze durch Räume wachsen, die durch die ausgesparten Abschnitte des Zackenmusters bereitgestellt werden.

7. Verfahren nach einem der Ansprüche 1-4, **dadurch gekennzeichnet, dass** der obere Rand des tubulären Körpers ein zinnenartiges Muster von benachbarten ausgesparten und erhabenen Abschnitten bildet und Zweige der Pflanze durch Räume wachsen, die durch die unteren Abschnitte des zinnenartigen Musters bereitgestellt werden.

8. Verfahren nach einem der vorherigen Ansprüche, **dadurch gekennzeichnet, dass** Belüftungsmittel vorgesehen sind, um einen Luftstrom von einem Ort in der Nähe der Unterseite des tubulären Körpers nach oben durch das Innere des tubulären Körpers zuzulassen.

9. Verfahren nach Anspruch 8, **dadurch gekennzeichnet, dass** das Belüftungsmittel wenigstens ein Loch in der Umfangswand des tubulären Körpers aufweist und der tubuläre Körper um den Topf und die Pflanze herum auf eine solche Weise platziert wird, dass sich wenigstens ein Loch über dem Rand des Topfs befindet.

10. Tubulärer Körper (61) und eine Pflanze, die in einem Klumpen aus Kultivierungsmaterial verwurzelt ist, insbesondere bestimmt für den Einsatz in einem Verfahren nach einem der vorherigen Ansprüche, wobei der genannte tubuläre Körper wenigstens im Wesentlichen formhaltig ist und einen oberen Rand (66) aufweist, der wenigstens in der Gebrauchsposition von dem Kultivierungsmaterialklumpen weg weist, wobei der obere Rand mit ausgesparten Abschnitten (68) versehen ist, **dadurch gekennzeichnet, dass** zum Schulen von Zweigen (69) der Pflanze in Richtung der ausgesparten Abschnitte die Innenfläche des tubulären Körpers mit Führungsflächen (74) versehen ist, die wenigstens im Wesentlichen in vertikaler Richtung verlaufen und die in Querschnittsansicht des tubulären Körpers gesehen einen Winkel mit einer Linie einschließen, die die Außenseite des tubulären Körpers umhüllt.

11. Tubulärer Körper nach Anspruch 10, **dadurch gekennzeichnet, dass** der mittlere Teil einer Führungsfläche zu einem oder in Richtung eines ausgesparten Abschnitt(s) im oberen Rand verläuft.

12. Tubulärer Körper nach Anspruch 10 oder 11, **dadurch gekennzeichnet, dass** der tubuläre Körper mit einer Schwächungslinie versehen ist, die transversal zu seiner Längsachse verläuft, sodass der tubuläre Körper in zwei Teile getrennt werden kann.

13. Tubulärer Körper nach einem der Ansprüche 10-12, **dadurch gekennzeichnet, dass** wenigstens ein Loch in der Umfangswand vorgesehen ist, sodass sich beim Gebrauch das genannte wenigstens eine Loch über dem oberen Rand eines eine Pflanze enthaltenden Topfs befindet.

14. Tubulärer Körper nach Anspruch 10, **dadurch gekennzeichnet, dass** der tubuläre Körper aus einem transparenten Plastikmaterial besteht.

## Revendications

1. Procédé pour cultiver des plantes enracinées dans une motte de matière de culture dans un récipient, où la plante est enfermée dans un corps tubulaire (61) au moins essentiellement indéformable, **caractérisé en ce que** le corps tubulaire comprend un bord supérieur (66) opposé à la motte de matière de culture dans la position d'utilisation, où des parties en retrait (68) sont fournies, avec les branches (69) de la plante poussant à travers l'espace fourni par les parties en retrait dans le bord supérieur jusqu'au-delà du bord supérieur du corps tubulaire, où, pour entraîner les branches d'une plante vers les parties en retrait, la surface intérieure du corps tubulaire faisant face à la plante est pourvue de surfaces de guidage (74) qui s'étendent au moins essentiellement dans la direction verticale dans la position d'utilisation du corps tubulaire et qui, vues en coupe transversale du corps tubulaire, comportent un angle avec une ligne enveloppant le côté extérieur du corps tubulaire.

2. Procédé selon la revendication 1, **caractérisé en ce que** ladite plante est la phalaenopsis, ou au moins une plante du type phalaenopsis.

3. Procédé selon la revendication 1 ou 2, **caractérisé en ce que** le corps tubulaire est serré sur le bord supérieur d'un pot servant de récipient pour la motte de matière de culture.

4. Procédé selon la revendication 1 ou 2, **caractérisé en ce que** le corps tubulaire est placé sur une surface de support et autour d'un pot contenant la motte de matière de culture.

5. Procédé selon une ou plusieurs des revendications précédentes, **caractérisé en ce que** le bord supérieur du corps tubulaire a un motif ondulé de parties en retrait et surélevées, et les branches de la plante poussent à travers des creux du motif ondulé qui forment lesdites parties en retrait.

6. Procédé selon une ou plusieurs des revendications 1 à 4, **caractérisé en ce que** le bord supérieur du corps tubulaire comprend un motif dentelé de parties adjacentes en retrait et surélevées, et les branches de la plante poussent à travers des espaces fournis par les parties en retrait du motif dentelé.

7. Procédé selon une ou plusieurs des revendications 1 à 4, **caractérisé en ce que** le bord supérieur du corps tubulaire comprend un motif crénelé de parties adjacentes en retrait et surélevées, et les branches de la plante poussent à travers des espaces fournis par les parties inférieures du motif crénelé.

8. Procédé selon l'une quelconque des revendications précédentes, **caractérisé en ce que** des moyens d'aération sont prévus pour permettre un écoulement d'air depuis un emplacement à proximité de la face inférieure du corps tubulaire vers le haut à travers l'intérieur du corps tubulaire.

9. Procédé selon la revendication 8, **caractérisé en ce que** lesdits moyens d'aération comprennent au moins un trou dans la paroi circonférentielle du corps tubulaire, et le corps tubulaire est placé autour du pot et de la plante de manière à ce que ledit au moins un trou soit situé au-dessus du bord du pot.

10. Corps tubulaire (61) et une plante étant enracinés dans une motte de matière de culture, destinés en particulier à être utilisés dans un procédé selon l'une quelconque des revendications précédentes, où ledit corps tubulaire est au moins essentiellement indéformable et comprend un bord supérieur (66) qui est opposé à la motte de matière de culture, au moins dans la position d'utilisation, lequel bord supérieur est pourvu de parties en retrait (68), **caractérisé en ce que**, pour entraîner les branches (69) de la plante vers les parties en retrait, la surface intérieure du corps tubulaire est pourvue de surfaces de guidage (74) qui s'étendent au moins essentiellement dans la direction verticale et qui, vues en coupe transversale du corps tubulaire, comportent un angle avec une ligne enveloppant le côté extérieur du corps tubulaire.

11. Corps tubulaire selon la revendication 10, **caractérisé en ce que** la partie centrale d'une surface de guidage s'étend vers ou dans la direction d'une partie en retrait dans le bord supérieur.

12. Corps tubulaire selon la revendication 10 ou 11, **caractérisé en ce que** le corps tubulaire est pourvu d'une ligne d'affaiblissement s'étendant transversalement par rapport à son axe longitudinal, de sorte que le corps tubulaire puisse être divisé en deux parties.

13. Corps tubulaire selon une ou plusieurs des revendications 10 à 12, **caractérisé en ce qu'**au moins un trou est fourni dans la paroi circonférentielle, de sorte que, en cours d'utilisation, ledit au moins un trou soit situé au-dessus du bord supérieur d'un pot contenant une plante.

14. Corps tubulaire selon la revendication 10, **caractérisé en ce que** le corps tubulaire est en matière plastique transparente.
